# EUROPÄISCHE PATENTSCHRIFT

(11) **EP 4 598 788 B1**
(45) Veröffentlichungstag und Bekanntmachung des Hinweises auf die Patenterteilung: **16.09.2026**
(21) Anmeldenummer: 23785784.2
(22) Anmeldetag: 05.10.2023
(51) Int. Cl.: B60W 30/09, B60W 60/00, B60W 50/00

(54) **VERFAHREN ZUM BETREIBEN EINES KONTROLLSYSTEMS EINES FAHRZEUGES, COMPUTERPROGRAMMPRODUKT SOWIE KONTROLLSYSTEM**
METHOD FOR OPERATING A CONTROL SYSTEM OF A VEHICLE, COMPUTER PROGRAM PRODUCT, AND CONTROL SYSTEM
PROCÉDÉ DE FONCTIONNEMENT D'UN SYSTÈME DE COMMANDE D'UN VÉHICULE, PRODUIT PROGRAMME INFORMATIQUE ET SYSTÈME DE COMMANDE

(30) Priorität: 07.10.2022 DE 102022210642
(43) Veröffentlichungstag der Anmeldung: 13.08.2025
(73) Patentinhaber: VOLKSWAGEN AKTIENGESELLSCHAFT, 38440 Wolfsburg (DE)
(72) Erfinder: LUTZ, Malte, 38126 Braunschweig (DE); BEHMANN, Nicolai, 30419 Hannover (DE)
(86) Internationale Anmeldenummer: PCT/EP2023/077640
(87) Internationale Veröffentlichungsnummer: WO 2024/074647

(56) Entgegenhaltungen:
- WO-A1-2020/165058
- WO-A1-2022/128012
- DE-A1- 102013 213 171
- DE-A1- 102017 011 808

## Beschreibung

Die Erfindung betrifft ein Verfahren zum Betreiben eines Kontrollsystems zum automatisierten Ansteuern eines Fahrzeugsystem eines Fahrzeuges, ein Computerprogrammprodukt, sowie ein Kontrollsystem zum automatisierten Ansteuern eines Fahrzeugsystem.

Aus dem Stand der Technik ist es bekannt, Fahrassistenzfunktionen, wie z. B. einen Notbremsassistenten, mit einzelnen Sensoren zu betreiben und anhand der Sensoren Fahrfunktionen auszuführen. Für Fahrzeuge, die beispielsweise mit einem Automatisierungslevel drei oder höher, zumindest teilweise autonom betrieben werden, ist jedoch in der Regel eine Zusammenführung von Sensordaten einer Vielzahl von Sensoren erforderlich.

Häufig zeichnen sich derartige Systeme daher durch zentrale Recheneinheiten in Form eines leistungsstarken Hauptrechners, ggf. unterstützt durch einen BackUp-Rechner, aus. Alle Aktoren und Sensoren interagieren mit diesen Einheiten. Der entsprechende Leistungsbedarf und/oder die erforderliche Rechenleistung impliziert eine hohe Komplexität des Hauptrechners. Ferner sind zum Teil lange "Datenstrecken" zwischen Sensorik und Recheneinheit vorhanden, die sich insbesondere in Fahrsituationen, die eine schnelle Reaktion erfordern, nachteilhaft auf die Latenz auswirken können.

Die Schrift DE 10 2017 011808 A1 offenbart ein Verfahren zur Regelung der Bewegung eines Fahrzeugs in einem automatisierten Fahrbetrieb, wenn bei einer festgestellten Beeinträchtigung von einem regulären Betriebsmodus zu einem Notbetriebsmodus umgeschaltet wird.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung beim Ansteuern einer Fahrzeugfunktion durch eine Zentraleinheit in einer Notsituation eine situationsadäquate und/oder schnelle Reaktion zu ermöglichen.

Die voranstehende Aufgabe wird gelöst durch ein Verfahren mit den Merkmalen des Anspruchs 1, ein Computerprogrammprodukt mit den Merkmalen des Anspruchs 9, sowie ein Kontrollsystem mit den Merkmalen des Anspruchs 10. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogrammprodukt und/oder dem erfindungsgemäßen Kontrollsystem und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist ein Verfahren zum Betreiben eines Kontrollsystems zum automatisierten Ansteuern eines Fahrzeugsystem eines Fahrzeuges vorgesehen. Das Kontrollsystem umfasst mehrere lokale Kontrolleinheiten und eine Zentraleinheit, die mit den Kontrolleinheiten, während des Verfahrens kommuniziert. Das Verfahren umfasst, insbesondere in Form von Verfahrensschritten:
- Erfassen von Umgebungsdaten des Fahrzeuges durch die Kontrolleinheiten, die jeweils ein lokales Kontrollelement und zumindest eine Sensoreinheit, welche mit dem jeweiligen lokalen Kontrollelement verbunden ist, aufweisen,
- Ausgeben eines Normalsteuersignals zum automatisierten Ansteuern des Fahrzeugsystems in Abhängigkeit von den Umgebungsdaten der lokalen Kontrolleinheiten durch die Zentraleinheit,
- Erkennen einer Notsituation durch ein erkennendes Kontrollelement der lokalen Kontrollelemente der Kontrolleinheiten in Abhängigkeit von den, insbesondere jeweiligen, Umgebungsdaten,
- Bestimmen einer Reaktionsmaßnahme in Abhängigkeit von der Notsituation durch das erkennende Kontrollelement,
- Ausgeben eines Notsteuersignals zum automatisierten Ansteuern des Fahrzeugsystems in Abhängigkeit von der Reaktionsmaßnahme durch das erkennende Kontrollelement.

Bei dem Fahrzeug handelt es sich vorzugsweise um ein Kraftfahrzeug, insbesondere in Form eines Elektrofahrzeuges. Ferner kann das Fahrzeug und/oder die Zentraleinheit für einen zumindest teilweisen oder vollständigen autonomen Fahrbetrieb des Fahrzeuges, vorzugsweise mit einem Automatisierungslevel drei oder höher, ausgebildet sein. Bei dem Fahrzeugsystem kann es sich beispielsweise um eine Fahrzeugsteuerung, ein Lenksystem, ein Antriebssystem und/oder ein Bremssystem des Fahrzeuges handeln.

Durch die Sensoreinheiten der Kontrolleinheiten können lokale Sensordaten bereitgestellt werden, um die Umgebungsdaten zu erfassen. Die Sensoreinheiten können jeweils mehrere Sensoren umfassen. Die Sensordaten und/oder die Umgebungsdaten können beispielsweise Bilddaten, Radardaten, Lidar-Daten, und/oder Ultraschalldaten der Außenwelt des Fahrzeuges umfassen. Ferner können die Sensordaten und/oder die Umgebungsdaten anhand von Fahrzeugdaten, wie z. B. einem Schlupf der Räder, erfasst werden. Ferner können die Kontrolleinheiten jeweils einen oder mehrere Aktoren umfassen. Insbesondere können die Kontrolleinheiten somit Teilsysteme des Kontrollsystems bilden, welche dezentral im Fahrzeug angeordnet sind. Ferner können die Kontrollelemente der Kontrolleinheiten jeweils einen Prozessor und/oder Mikroprozessor aufweisen.

Die Zentraleinheit kann in ein zentrales Steuergerät des Fahrzeuges integriert sein. Ferner kann die Zentraleinheit einen Prozessor und/oder einen Mikroprozessor aufweisen. Unter dem Normalsteuersignal kann insbesondere ein Signal zur Steuerung und/oder Regelung des Fahrzeugs und/oder des Fahrzeugsystems verstanden werden, um das Fahrzeug in einem Normalbetriebsmodus zu steuern. Beim Ausgeben des Normalsteuersignals kann das Fahrzeugsystem und/oder das Kontrollsystem in dem Normalbetriebsmodus betrieben werden. Zum Ausgeben des Normalsteuersignals können die Umgebungsdaten durch die Kontrollelemente und/oder die Zentraleinheit ausgewertet werden. Insbesondere kann vorgesehen sein, dass die Kontrollelemente eine Vorauswertung der Sensordaten der Sensoreinheiten durchführen, um die vorausgewerteten Sensordaten in Form der Umgebungsdaten an die Zentraleinheit weiterzuleiten. Auf Basis der Umgebungsdaten aller Kontrolleinheiten kann die Zentraleinheit ein Fahrmanöver berechnen und das Normalsteuersignal zum Ausführen des Fahrmanövers ausgeben. Beim Ausgeben des Normalsteuersignals kann das Normalsteuersignal durch die Zentraleinheit an eine Fahrzeugsteuerung und/oder direkt an das Fahrzeugsystem gesendet werden. Es ist denkbar, dass zwischen die Zentraleinheit und das Fahrzeugsystem ein Gateway zum Überprüfen des Normalsteuersignals, insbesondere hinsichtlich einer Berechtigung der Zentraleinheit zum Ansteuern des Fahrzeugsystems, geschaltet ist.

Das Erkennen der Notsituation erfolgt vorzugsweise anhand der Umgebungsdaten der dem erkennenden Kontrollelement zugeordneten Kontrolleinheit, d. h. insbesondere anhand eines lokalen Teils aller Umgebungsdaten der Kontrolleinheiten des Kontrollsystems. Dazu kann beispielsweise die Fahrsituation durch das erkennende Kontrollelement analysiert werden. Insbesondere kann während des Ausgebens des Normalsteuersignals jedes der Kontrollelemente zumindest einen lokalen Teil der Umgebungsdaten auswerten, um eine etwaige Notsituation zu erkennen.

Die Notsituation kann eine kritische, insbesondere sicherheitskritische, Fahrsituation des Fahrzeuges umfassen. Beispielsweise kann in der Notsituation durch das erkennende Kontrollelement ein herannahender Verkehrsteilnehmer erkannt werden, der insbesondere durch die Zentraleinheit beim Ausgeben des Normalsteuersignals nicht oder noch nicht als kritisch eingestuft wurde. Unter dem Notsteuersignal kann insbesondere ein Signal zur Steuerung und/oder Regelung des Fahrzeugs und/oder des Fahrzeugsystems verstanden werden, um das Fahrzeug in einem Notbetriebsmodus zu steuern und/oder die Notsituation zu überwinden. Beim Ausgeben des Notsteuersignals kann das Fahrzeugsystem und/oder das Kontrollsystem in dem Notbetriebsmodus betrieben werden. Es kann vorgesehen sein, dass das Notsteuersignal, insbesondere durch das Fahrzeugsystem und/oder die Zentraleinheit, gegenüber dem Normalsteuersignal priorisiert wird. Beim automatisierten Ansteuern des Fahrzeugsystems in Abhängigkeit von dem Normalsteuersignal und/oder dem Notsteuersignal kann durch das Fahrzeugsystem vorzugsweise ein autonomes Fahrmanöver ausgeführt werden.

Durch die Reaktionsmaßnahme kann somit das erkennende Kontrollelement lokal eine Maßnahme bestimmen, um die Notsituation zu überwinden. Insbesondere kann die Auswertung der Umgebungsdaten durch die Zentraleinheit vermieden werden, um die Reaktionsmaßnahme zu bestimmen und das Notsteuersignal auszugeben. Durch das Ausgeben des Notsteuersignals kann in der Notsituation ein reflexartiger Eingriff in das Fahrzeugsystem erfolgen. Es ist somit im Rahmen der Erfindung erkannt worden, dass eine Reaktionszeit auf das Erfassen der lokalen Umgebungsdaten verkürzt werden kann, wenn den Kontrolleinheiten eine lokale Kompetenz und/oder Berechtigung zugewiesen ist, um in der Notsituation in die außerhalb der Notsituation zentrale Steuerung einzugreifen.

Es ist ferner bei einem erfindungsgemäßen Verfahren denkbar, dass jeder der Kontrolleinheiten eine Fahrzeugzone des Fahrzeuges zugeordnet ist, für welche die jeweilige Kontrolleinheit die Umgebungsdaten erfasst, insbesondere wobei die Umgebungsdaten der Kontrolleinheiten, d. h. insbesondere aller Kontrolleinheiten, zum Ausgeben des Normalsteuersignals durch die Zentraleinheit zu einer Fahrzeugumgebung zusammengeführt werden. Unter der Fahrzeugzone kann vorzugsweise ein Teil des Fahrzeuges und/oder der Außenwelt des Fahrzeuges verstanden werden. Beispielsweise können die Fahrzeugzonen eine Frontzone, eine Heckzone und zwei Seitenzonen umfassen, die von jeweils einer der Kontrolleinheiten überwacht werden. Somit kann jedes Kontrollelement die Sensoren und/oder Aktoren der zugeordneten Fahrzeugzone umfassen. Es ist denkbar, dass bei der Zusammenführung der Umgebungsdaten zu der Fahrzeugumgebung ein Modell des Fahrzeuges und/oder der Außenwelt des Fahrzeuges anhand aller Umgebungsdaten der Kontrolleinheiten durch die Zentraleinheit erzeugt wird. Durch die Zuteilung der Fahrzeugzonen kann jedes Kontrollelement der Kontrolleinheiten in Bezug auf die Umgebungsdaten und die Notsituation einen separaten Bereich des Fahrzeuges und/oder der Außenwelt des Fahrzeuges verantworten. Dadurch kann eine Rechenleistung zum Auswerten der Umgebungsdaten zumindest teilweise dezentralisiert werden. Ferner können den einzelnen Kontrollelementen definierte Berechtigungen und/oder Kompetenzen zugewiesen werden, um die Reaktionsmaßnahmen zu bestimmen.

Im Rahmen der Erfindung ist es weiterhin denkbar, dass das Normalsteuersignal zum Ausgeben des Normalsteuersignals durch die Zentraleinheit anhand der Umgebungsdaten in Abhängigkeit von Komfortparametern für einen Fahrkomfort des Fahrzeuges berechnet wird. Durch die Komfortparameter kann somit insbesondere in einem Normalsteuermodus ein hoher Fahrkomfort für die Insassen des Fahrzeuges ermöglicht werden. Vorzugsweise werden die Komfortparameter beim Bestimmen der Reaktionsmaßnahme und/oder beim Ausgeben des Notsteuersignals zumindest teilweise oder vollständig vernachlässigt. Insbesondere kann in der Notsituation ein Komfortverlust in Kauf genommen werden, um die Notsituation zu überwinden. Dadurch ist es beispielsweise nicht notwendig, dass den lokalen Kontrollelementen der Kontrolleinheiten alle Fahrzeugdaten und/oder die Komfortparameter zur Verfügung stehen. Ferner können Berechnungen zum Bestimmen der Reaktionsmaßnahme ohne oder mit reduzierter Berücksichtigung der Komfortparameter vereinfacht sein, wodurch eine verbesserte Reaktionsgeschwindigkeit durch das erkennende Kontrollelement erzielt werden kann.

Vorzugsweise kann bei einem erfindungsgemäßen Verfahren vorgesehen sein, dass die Reaktionsmaßnahme eine Nottrajektorie zum Ausführen eines Reaktionsmanövers des Fahrzeuges und/oder zum Eingriff anhand der Nottrajektorie in ein von der Zentraleinheit initiiertes Manöver des Fahrzeuges umfasst. Das von der Zentraleinheit initiierte Manöver kann insbesondere durch das Normalsteuersignal initiiert und/oder durchgeführt werden. Dabei kann für das Manöver eine Trajektorie für das Fahrzeug vorgegeben werden. Unter der Nottrajektorie kann insbesondere eine geplante Fahrbahn des Fahrzeuges und/oder eine Änderung einer geplanten Fahrbahn des Fahrzeuges verstanden werden, um die Notsituation zu überwinden. Insbesondere kann die Nottrajektorie Wegdaten in der Fahrzeugumgebung, vorzugsweise in Form von Kurvendaten und/oder Beschleunigungsdaten, zum Erzielen der Nottrajektorie für das Fahrzeug umfassen. Durch die Änderung der geplanten Fahrbahn kann beispielsweise der Eingriff in das von der Zentraleinheit initiierte Manöver erfolgen. Somit kann durch das erkennende Kontrollelement insbesondere ein autonomer Fahrreflex erfolgen, um die Überwindung der Notsituation zu ermöglichen. Beispielsweise kann durch die Nottrajektorie das Reaktionsmanöver in Form eines Ausweichmanövers des Fahrzeuges zum Ausweichen eines Hindernisses in der Notsituation und/oder in Form eines Bremsmanövers ausgeführt werden.

Weiterhin ist es bei einem erfindungsgemäßen Verfahren denkbar, dass jedes der lokalen Kontrollelemente durch jeweils zumindest eine, vorzugsweise genau eine, Notfallkommunikationsverbindung mit dem Fahrzeugsystem unmittelbar verbunden ist, insbesondere wobei das Notsteuersignals durch das erkennende Kontrollelement direkt über die jeweilige Notfallkommunikationsverbindung, d. h. insbesondere ohne Umweg über die Zentraleinheit, an das Fahrzeugsystem gesendet wird. Die Notfallkommunikationsverbindung kann eine elektrische Verbindungsleitung und/oder eine drahtlose Verbindung umfassen.

Insbesondere kann die Zentraleinheit beim Ausgeben des Notsteuersignals durch die Notfallkommunikationsverbindung ausgelassen und/oder vermieden werden. Dadurch kann eine Wegstrecke für das Notsteuersignal zum automatisierten Ansteuern des Fahrzeugsystems verringert werden. Ferner können etwaige Auswertungen des Notsteuersignals durch die Zentraleinheit vermieden werden. Dadurch kann eine Latenz bei der Datenübertragung von dem erkennende Kontrollelement zu dem Fahrzeugsystem verringert und damit die Reaktionszeit auf die Notsituation verkürzt werden.

Weiterhin ist es bei einem erfindungsgemäßen Verfahren denkbar, dass das Notsteuersignal durch das erkennende Kontrollelement an die Zentraleinheit gesendet wird, vorzugsweise wobei das Notsteuersignal eine Priorisierungsinformation umfasst, durch welche das Notsteuersignal zum automatisierten Ansteuern des Fahrzeugsystems von der Zentralsteuereinheit an das Fahrzeugsystem weitergeleitet und/oder gegenüber dem Normalsteuersignal priorisiert wird. Die Priorisierungsinformation kann beispielsweise in einem Adressteil des Notsteuersignals übermittelt werden, um ein Routing des Notsteuersignals zu ermöglichen. Anhand der Priorisierungsinformation kann die Zentraleinheit angewiesen werden, eine Auswertung des Notsteuersignals zumindest teilweise zu vermeiden und/oder das Notsteuersignal an das Fahrzeugsystem weiterzuleiten. Dadurch ist es beispielsweise nicht notwendig, separate Verbindungsleitungen zwischen den Kontrollelementen und dem Fahrzeugsystem vorzusehen. Ferner kann die Zentraleinheit somit durch das Notsteuersignal über die Reaktionsmaßnahme informiert werden, z. B. um nach dem Abschluss der Reaktionsmaßnahme eine angepasste Ansteuerung vornehmen zu können.

Weiterhin ist es bei einem erfindungsgemäßen Verfahren denkbar, dass das erkennende Kontrollelement die Reaktionsmaßnahme beim Bestimmen der Reaktionsmaßnahme berechnet und/oder dass das erkennende Kontrollelement mehrere Maßnahmenvorschläge für die Reaktionsmaßnahme von der Zentraleinheit erhält und die Reaktionsmaßnahme anhand der Maßnahmenvorschläge bestimmt. Beim Berechnen der Reaktionsmaßnahme kann das Kontrollelement die Reaktionsmaßnahme insbesondere selbstständig und/oder autonom anhand der dem Kontrollelement vorliegenden lokalen Umgebungsdaten berechnen. Beim Bestimmen der Reaktionsmaßnahme aus den Maßnahmenvorschlägen kann das erkennende Kontrollelement die Reaktionsmaßnahme insbesondere aus den Maßnahmenvorschlägen auswählen und/oder einen der Maßnahmenvorschläge modifizieren. Es kann beispielsweise vorgesehen sein, dass die Zentraleinheit für jedes Fahrmanöver, welches durch das Normalsteuersignal initiiert wird, Notfallmaßnahmen berechnet und die Notfallmaßnahmen den Kontrollelementen für die Reaktionsmaßnahme zur Verfügung stellt. Ferner ist es denkbar, dass die Maßnahmenvorschläge für jede Kontrolleinheit und/oder jede Fahrzeugzone vorbestimmt sind. Beispielsweise können die Maßnahmenvorschläge in Form eines zonenspezifischen Maßnahmenkatalogs, insbesondere zum Abruf durch das jeweilige Kontrollelement, abgespeichert sein. Dadurch ist es nicht notwendig, dass das Kontrollelement die Reaktionsmaßnahme vollständig selbst berechnet, so dass die Rechenleistung und/oder die Reaktionszeit der Kontrollelemente reduziert sein kann.

Es ist ferner bei einem erfindungsgemäßen Verfahren denkbar, dass das Verfahren umfasst:
- Senden von Reaktionsdaten zu der Reaktionsmaßnahme und/oder dem Notsteuersignal durch das erkennende Kontrollelement an die Zentraleinheit, insbesondere um der Zentraleinheit die Ansteuerung des Fahrzeugsystems in Abhängigkeit von der Reaktionsmaßnahme nach der Reaktionsmaßnahme zu ermöglichen.

Die Reaktionsdaten können beispielsweise die Notfalltrajektorie und/oder einen Zielort des Reaktionsmanövers umfassen. Insbesondere kann die Zentraleinheit durch die Reaktionsdaten darüber informiert werden, an welchem Punkt des Reaktionsmanövers die Zentraleinheit das Ansteuern des Fahrzeugsystems wieder übernehmen soll und/oder übernimmt. Somit kann durch die Reaktionsdaten eine Abstimmung zwischen dem erkennenden Kontrollelement und der Zentraleinheit realisiert sein. Dadurch kann die Übernahme der automatischen Ansteuerung des Fahrzeugsystems durch die Zentraleinheit vereinfacht sein.

Gemäß einem weiteren Aspekt der Erfindung ist ein Computerprogrammprodukt vorgesehen. Das Computerprogrammprodukt umfasst Befehle, die bei einer Ausführung durch ein Kontrollsystem das Kontrollsystem dazu veranlassen, ein erfindungsgemäßes Verfahren auszuführen.

Somit bringt ein erfindungsgemäßes Computerprogrammprodukt die gleichen Vorteile mit sich, wie sie bereits ausführlich mit Bezug auf ein erfindungsgemäßes Verfahren beschrieben worden sind. Bei dem Verfahren kann es sich insbesondere um ein computerimplementiertes Verfahren handeln. Das Computerprogrammprodukt kann als computerlesbarer Anweisungscode implementiert sein. Ferner kann das Computerprogrammprodukt auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Ferner kann das Computerprogrammprodukt in einem Netzwerk wie beispielsweise dem Internet bereitstellbar oder bereitgestellt sein, von dem es bei Bedarf von einem Nutzer heruntergeladen oder online ausgeführt werden kann. Das Computerprogrammprodukt kann sowohl mittels einer Software, als auch mittels einer oder mehrerer spezieller elektronischer Schaltungen, d.h. in Hardware oder in beliebig hybrider Form, d.h. mittels Software-Komponenten und Hardware-Komponenten, realisiert sein.

Gemäß einem weiteren Aspekt der Erfindung ist ein Kontrollsystem zum automatisierten Ansteuern eines Fahrzeugsystem eines Fahrzeuges vorgesehen. Das Kontrollsystem weist mehrere lokale Kontrolleinheiten zum Erfassen von Umgebungsdaten des Fahrzeuges auf. Die Kontrolleinheiten weisen jeweils ein lokales Kontrollelement und zumindest eine Sensoreinheit auf. Die jeweilige Sensoreinheit ist mit dem jeweiligen lokalen Kontrollelement verbunden. Ferner weist das Kontrollsystem eine Zentraleinheit zum automatisierten Ansteuern des Fahrzeugsystems in Abhängigkeit von den, insbesondere jeweiligen, Umgebungsdaten der lokalen Kontrolleinheiten auf. Jedes der lokalen Kontrollelemente der Kontrolleinheiten ist ferner zum Erkennen einer Notsituation in Abhängigkeit von den Umgebungsdaten, zum Bestimmen einer Reaktionsmaßnahme in Abhängigkeit von der Notsituation und zum Ausgeben eines Notsteuersignals zum automatisierten Ansteuern des Fahrzeugsystems in Abhängigkeit von der Reaktionsmaßnahme ausgebildet.

Somit bringt ein erfindungsgemäßes Kontrollsystem die gleichen Vorteile mit sich, wie sie bereits ausführlich mit Bezug auf ein erfindungsgemäßes Verfahren und/oder ein erfindungsgemäßes Computerprogrammprodukt beschrieben worden sind. Es kann vorgesehen sein, dass das Fahrzeug und/oder das Fahrzeugsystem Teil des Kontrollsystems ist. Vorzugsweise kann jedes der lokalen Kontrollelemente durch jeweils zumindest eine Notfallkommunikationsverbindung mit dem Fahrzeugsystem unmittelbar verbunden sein.

Weiterhin kann bei einem erfindungsgemäßen Kontrollsystem vorteilhafterweise vorgesehen sein, dass die Kontrolleinheiten und die Zentraleinheit zum Ausführen eines erfindungsgemäßen Verfahrens ausgebildet sind. Insbesondere können die Kontrolleinheiten und die Zentraleinheiten eine Kontrollvorrichtung zum Ausführen des Verfahrens bilden. Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen schematisch:
- Figur 1: ein Fahrzeug mit einem erfindungsgemäßen Kontrollsystem zum Ausführen eines erfindungsgemäßen Verfahrens,
- Figur 2: das Verfahren in schematischer Darstellung von Verfahrensschritten, und
- Figur 3: das Kontrollsystem mit Notfallkommunikationsverbindungen.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

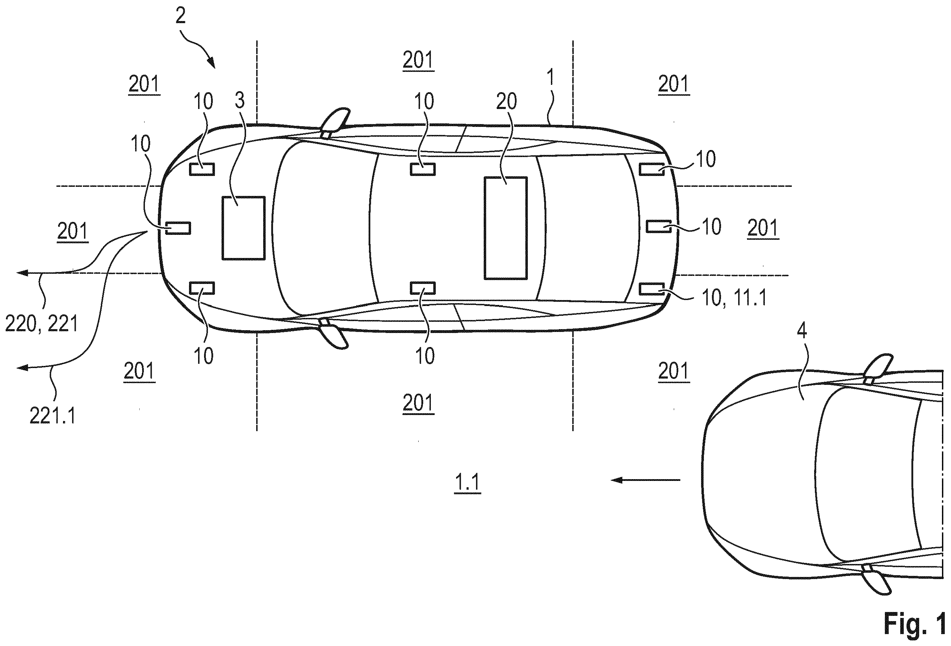

Figur 1 zeigt ein Fahrzeug 1 mit einem erfindungsgemäßen Kontrollsystem 2 zum automatisierten Ansteuern eines Fahrzeugsystems 3 des Fahrzeuges 1 in einem ersten Ausführungsbeispiel. Bei dem Fahrzeugsystem 3 kann es sich beispielsweise um eine Fahrzeugsteuerung, ein Lenksystem und/oder ein Bremssystem des Fahrzeuges 1 handeln. Das Kontrollsystem 2 umfasst mehrere lokale Kontrolleinheiten 10 zum Erfassen 101 von Umgebungsdaten 200 des Fahrzeuges 1, die jeweils ein lokales Kontrollelement 11 und zumindest eine Sensoreinheit 12, welche mit dem jeweiligen lokalen Kontrollelement 11 verbunden ist. Jeder der Kontrolleinheiten 10 ist eine Fahrzeugzone 201 des Fahrzeuges 1 zugeordnet, für welche die jeweilige Kontrolleinheit 10 die Umgebungsdaten 200 erfasst. Dazu kann jede der Kontrolleinheiten 10 vorteilhafterweise mehrere Sensoreinheiten 12 und/oder einen oder mehrere Aktoren 14 aufweisen.

Ferner umfasst das Kontrollsystem 2 eine Zentraleinheit 20 zum automatisierten Ansteuern des Fahrzeugsystems 3 in Abhängigkeit von den Umgebungsdaten 200 der lokalen Kontrolleinheiten 10. Insbesondere sind die Kontrolleinheiten 10 und die Zentraleinheit 20 zum Ausführen eines erfindungsgemäßen Verfahrens 100 zum Betreiben des Kontrollsystems 2 ausgebildet. Dazu kann ein Computerprogrammprodukt vorgesehen sein, das Befehle umfasst, die bei einer Ausführung durch das Kontrollsystem 2 das Kontrollsystem 2 dazu veranlassen, das Verfahren 100 auszuführen.

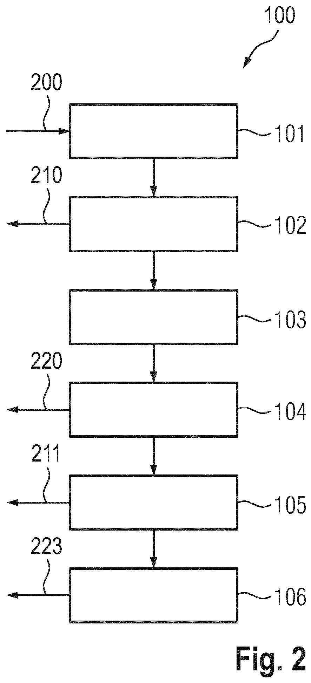

Das Verfahren 100 ist in schematischer Darstellung der Verfahrensschritte in Figur 2 gezeigt. Dabei erfolgt zunächst das Erfassen 101 der Umgebungsdaten 200 des Fahrzeuges 1 durch die Kontrolleinheiten 10. Weiterhin wird ein Ausgeben 102 eines Normalsteuersignals 210 für das automatisierte Ansteuern des Fahrzeugsystems 3 in Abhängigkeit von den Umgebungsdaten 200 der lokalen Kontrolleinheiten 10 durch die Zentraleinheit 20 ausgeführt. Dazu kommuniziert die Zentraleinheit 20 mit den Kontrolleinheiten 10, um die Umgebungsdaten 200 der Kontrolleinheiten 10 zum Ausgeben 102 des Normalsteuersignals 210 durch die Zentraleinheit 20 zu einer Fahrzeugumgebung 1.1 zusammenzuführen. Anhand der Fahrzeugumgebung 1.1 wird das Normalsteuersignal 210 durch die Zentraleinheit 20 anhand der Umgebungsdaten 200 in Abhängigkeit von Komfortparametern 202 für einen Fahrkomfort des Fahrzeuges 1 berechnet. Dadurch kann ein Normalbetrieb des Fahrzeuges 1 und/oder des Fahrzeugsystems 3 ermöglicht werden, in welchem die Zentraleinheit 20 das Fahrzeug 1 zumindest teilweise oder vollständig autonom steuert.

In einer Notsituation erfolgt ferner ein Erkennen 103 der Notsituation durch ein erkennendes Kontrollelement 11.1 der lokalen Kontrollelemente 11 der Kontrolleinheiten 10 in Abhängigkeit von den Umgebungsdaten 200. Dazu ist jedes der lokalen Kontrollelemente 11 der Kontrolleinheiten 10 zum Erkennen 103 der Notsituation in Abhängigkeit von den Umgebungsdaten 200 ausgebildet. Wie in Figur 1 dargestellt, kann es sich bei der Notsituation beispielsweise um einen Spurwechsel des Fahrzeuges 1 handeln, bei welchem ein weiterer Verkehrsteilnehmer 4 zunächst nicht durch die Zentraleinheit 20 erkannt und/oder als kritisch eingestuft wurde. Beispielsweise kann dies der Fall sein, wenn der Verkehrsteilnehmer 4 unerwartet beschleunigt oder zuvor verdeckt war. Bei dem erkennenden Kontrollelement 11.1 handelt es sich in diesem Fall z. B. um das heckseitig, in Fahrtrichtung des Fahrzeuges 1 links angeordnete lokale Kontrollelement 11 der zugeordneten Kontrolleinheit 10, da der Verkehrsteilnehmer 4 in der Fahrzeugzone 201 des erkennenden Kontrollelementes 11.1 erfasst wird.

Daraufhin erfolgt ein Bestimmen 104 einer Reaktionsmaßnahme 220 in Abhängigkeit von der Notsituation durch das erkennende Kontrollelement 11.1. Die Reaktionsmaßnahme 220 umfasst dabei insbesondere eine Nottrajektorie 221 zum Ausführen eines Reaktionsmanövers des Fahrzeuges 1 mit einem Eingriff in ein von der Zentraleinheit 20 initiiertes Manöver 221.1 des Fahrzeuges 1, d. h. insbesondere den Spurwechsel, anhand der Nottrajektorie 221. Es kann vorgesehen sein, dass das erkennende Kontrollelement 11.1 die Reaktionsmaßnahme 220 beim Bestimmen 104 der Reaktionsmaßnahme 220 berechnet. Zusätzlich oder alternativ kann das erkennende Kontrollelement 11.1 mehrere Maßnahmenvorschläge 222 für die Reaktionsmaßnahme 220 von der Zentraleinheit 20 erhalten und die Reaktionsmaßnahme 220 anhand der Maßnahmenvorschläge 222 bestimmen.

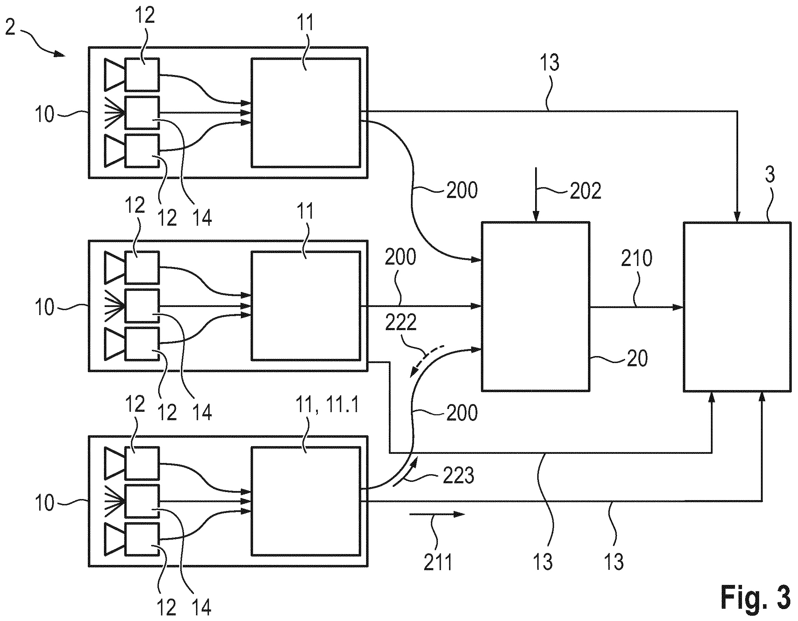

In Abhängigkeit von der Reaktionsmaßnahme 220 erfolgt ein Ausgeben 105 eines Notsteuersignals 211 zum automatisierten Ansteuern des Fahrzeugsystems 3 durch das erkennende Kontrollelement 11.1. Durch die Ansteuerung des Notfallsystems mit dem Notsteuersignal 211 kann das Fahrzeug 1 z. B. der Nottrajektorie 221 folgen. Zum Ausgeben 105 des Notsteuersignals 211 an das Fahrzeugsystem 3 ist insbesondere jedes der lokalen Kontrollelemente 11 durch jeweils eine Notfallkommunikationsverbindung 13 mit dem Fahrzeugsystem 3 unmittelbar verbunden ist, wie in Figur 3 dargestellt. Das Notsteuersignals 211 kann dadurch direkt über die jeweilige Notfallkommunikationsverbindung 13 von dem erkennenden Kontrollelement 11.1 an das Fahrzeugsystem 3 gesendet werden. Um der Zentraleinheit 20 die Ansteuerung des Fahrzeugsystems 3 in Abhängigkeit von der Reaktionsmaßnahme 220 nach der Reaktionsmaßnahme 220 zu ermöglichen, ist bei dem Verfahren 100 ferner ein Senden 106 von Reaktionsdaten 223 zu der Reaktionsmaßnahme 220 und/oder dem Notsteuersignal 211 durch das erkennende Kontrollelement 11.1 an die Zentraleinheit 20 vorgesehen.

Zusätzlich oder alternativ kann das Notsteuersignal 211 durch das erkennende Kontrollelement 11.1 an die Zentraleinheit 20 gesendet werden. In diesem Fall umfasst das Notsteuersignal 211 vorzugsweise eine Priorisierungsinformation, durch welche das Notsteuersignal 211 zum automatisierten Ansteuern des Fahrzeugsystems 3 von der Zentralsteuereinheit an das Fahrzeugsystem 3 weitergeleitet und/oder gegenüber dem Normalsteuersignal 210 priorisiert wird. In diesem Fall kann die Zentraleinheit 20 durch das Notsteuersignal 211 selbst über die Reaktionsmaßnahme 220 informiert werden. Es kann vorgesehen sein, dass das Ausgeben 105 des Notsteuersignals 211 über die Notfallkommunikationsverbindung 13 direkt zum Fahrzeugsystem 3 und zusätzlich mit der Priorisierungsinformation über die Zentraleinheit 20 redundant erfolgt.

Um das Verfahren 100 für jede der Fahrzeugzonen 201 zu ermöglichen, ist jedes der lokalen Kontrollelemente 11 zum Bestimmen 104 einer Reaktionsmaßnahme 220 in Abhängigkeit von der Notsituation und zum Ausgeben 105 eines Notsteuersignals 211 zum automatisierten Ansteuern des Fahrzeugsystems 3 in Abhängigkeit von der Reaktionsmaßnahme 220 ausgebildet, so dass je nach Auftreten der Notsituation jedes der lokalen Kontrollelemente 11 ein erkennendes Kontrollelement 11.1 bilden kann.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den durch die Ansprüche definierten Rahmen der vorliegenden Erfindung zu verlassen.

### Bezugszeichenliste

- 1: Fahrzeug
- 1.1: Fahrzeugumgebung
- 2: Kontrollsystem
- 3: Fahrzeugsystem
- 4: Verkehrsteilnehmer

- 10: Kontrolleinheiten
- 11: lokales Kontrollelement
- 11.1: erkennendes Kontrollelement
- 12: Sensoreinheit
- 13: Notfallkommunikationsverbindung
- 14: Aktor

- 20: Zentraleinheit

- 100: Verfahren
- 101: Erfassen von 200
- 102: Ausgeben von 210
- 103: Erkennen von 103
- 104: Bestimmen von 220
- 105: Ausgeben von 211
- 106: Senden von 223

- 200: Umgebungsdaten
- 201: Fahrzeugzone
- 202: Komfortparameter

- 210: Normalsteuersignal
- 211: Notsteuersignal

- 220: Reaktionsmaßnahme
- 221: Nottrajektorie
- 221.1: Manöver
- 222: Maßnahmenvorschläge
- 223: Reaktionsdaten

## Patentansprüche

1. Verfahren (100) zum Betreiben eines Kontrollsystems (2) zum automatisierten Ansteuern eines Fahrzeugsystem (3) eines Fahrzeuges (1) mit mehreren lokalen Kontrolleinheiten (10) und einer Zentraleinheit (20), die mit den Kontrolleinheiten (10) kommuniziert,
wobei das Verfahren die folgenden Verfahrensschritte umfasst:
- Erfassen (101) von Umgebungsdaten (200) des Fahrzeuges (1) durch die lokalen Kontrolleinheiten (10), die jeweils ein lokales Kontrollelement (11) und zumindest eine Sensoreinheit (12), welche mit dem jeweiligen lokalen Kontrollelement (11) verbunden ist, aufweisen,
- Ausgeben (102) eines Normalsteuersignals (210) zum automatisierten Ansteuern des Fahrzeugsystems (3) in Abhängigkeit von den Umgebungsdaten (200) der lokalen Kontrolleinheiten (10) durch die Zentraleinheit (20),
**dadurch gekennzeichnet,**
**dass** das Verfahren die folgenden Verfahrensschritte umfasst:
- Erkennen (103) einer Notsituation durch ein erkennendes Kontrollelement (11.1) der lokalen Kontrollelemente (11) der lokalen Kontrolleinheiten (10) in Abhängigkeit von den Umgebungsdaten (200),
- Bestimmen (104) einer Reaktionsmaßnahme (220) in Abhängigkeit von der Notsituation durch das erkennende Kontrollelement (11.1),
- Ausgeben (102) eines Notsteuersignals (211) zum automatisierten Ansteuern des Fahrzeugsystems (3) in Abhängigkeit von der Reaktionsmaßnahme (220) durch das erkennende Kontrollelement (11.1).

2. Verfahren (100) nach Anspruch 1,
**dadurch gekennzeichnet,**
**dass** jeder der Kontrolleinheiten (10) eine Fahrzeugzone (201) des Fahrzeuges (1) zugeordnet ist, für welche die jeweilige Kontrolleinheit (10) die Umgebungsdaten (200) erfasst, wobei die Umgebungsdaten (200) der Kontrolleinheiten (10) zum Ausgeben (102) des Normalsteuersignals (210) durch die Zentraleinheit (20) zu einer Fahrzeugumgebung (1.1) zusammengeführt werden.

3. Verfahren (100) nach Anspruch 1 oder 2,
**dadurch gekennzeichnet,**
**dass** das Normalsteuersignal (210) zum Ausgeben (102) des Normalsteuersignals (210) durch die Zentraleinheit (20) anhand der Umgebungsdaten (200) in Abhängigkeit von Komfortparametern (202) für einen Fahrkomfort des Fahrzeuges (1) berechnet wird.

4. Verfahren (100) nach einem der vorhergehenden Ansprüche,
**dadurch gekennzeichnet,**
**dass** die Reaktionsmaßnahme (220) eine Nottrajektorie (221) zum Ausführen eines Reaktionsmanövers des Fahrzeuges (1) und/oder zum Eingriff anhand der Nottrajektorie (221) in ein von der Zentraleinheit (20) initiiertes Manöver (221.1) des Fahrzeuges (1) umfasst.

5. Verfahren (100) nach einem der vorhergehenden Ansprüche,
**dadurch gekennzeichnet,**
**dass** jedes der lokalen Kontrollelemente (11) durch jeweils zumindest eine Notfallkommunikationsverbindung (13) mit dem Fahrzeugsystem (3) unmittelbar verbunden ist, wobei das Notsteuersignals (211) durch das erkennende Kontrollelement (11.1) direkt über die jeweilige Notfallkommunikationsverbindung (13) an das Fahrzeugsystem (3) gesendet wird.

6. Verfahren (100) nach einem der vorhergehenden Ansprüche,
**dadurch gekennzeichnet,**
**dass** das Notsteuersignal (211) durch das erkennende Kontrollelement (11.1) an die Zentraleinheit (20) gesendet wird, wobei das Notsteuersignal (211) eine Priorisierungsinformation umfasst, durch welche das Notsteuersignal (211) zum automatisierten Ansteuern des Fahrzeugsystems (3) von der Zentralsteuereinheit (20) an das Fahrzeugsystem (3) weitergeleitet und/oder gegenüber dem Normalsteuersignal (210) priorisiert wird.

7. Verfahren (100) nach einem der vorhergehenden Ansprüche,
**dadurch gekennzeichnet,**
**dass** das erkennende Kontrollelement (11.1) die Reaktionsmaßnahme (220) beim Bestimmen (104) der Reaktionsmaßnahme (220) berechnet und/oder dass das erkennende Kontrollelement (11.1) mehrere Maßnahmenvorschläge (222) für die Reaktionsmaßnahme (220) von der Zentraleinheit (20) erhält und die Reaktionsmaßnahme (220) anhand der Maßnahmenvorschläge (222) bestimmt.

8. Verfahren (100) nach einem der vorhergehenden Ansprüche,
**dadurch gekennzeichnet,**
**dass** das Verfahren (100) umfasst:
- Senden (106) von Reaktionsdaten (223) zu der Reaktionsmaßnahme (220) und/oder dem Notsteuersignal (211) durch das erkennende Kontrollelement (11.1) an die Zentraleinheit (20), um der Zentraleinheit (20) die Ansteuerung des Fahrzeugsystems (3) in Abhängigkeit von der Reaktionsmaßnahme (220) nach der Reaktionsmaßnahme (220) zu ermöglichen.

9. Computerprogrammprodukt umfassend Befehle,
**dadurch gekennzeichnet,**
**dass** die Befehle bei einer Ausführung durch ein Kontrollsystem (2) das Kontrollsystem (2) dazu veranlassen, ein Verfahren (100) nach einem der vorhergehenden Ansprüche auszuführen.

10. Kontrollsystem (2) zum automatisierten Ansteuern eines Fahrzeugsystems (3) eines Fahrzeuges (1) aufweisend
mehrere lokale Kontrolleinheiten (10) zum Erfassen (101) von Umgebungsdaten (200) des Fahrzeuges (1), die jeweils ein lokales Kontrollelement (11) und zumindest eine Sensoreinheit (12), welche mit dem jeweiligen lokalen Kontrollelement (11) verbunden ist, aufweisen, und
eine Zentraleinheit (20) zum automatisierten Ansteuern des Fahrzeugsystems (3) in Abhängigkeit von den Umgebungsdaten (200) der lokalen Kontrolleinheiten (10), **dadurch gekennzeichnet,**
**dass** jedes der lokalen Kontrollelemente (11) der lokalen Kontrolleinheiten (10) zum Erkennen (103) einer Notsituation in Abhängigkeit von den Umgebungsdaten (200), zum Bestimmen (104) einer Reaktionsmaßnahme (220) in Abhängigkeit von der Notsituation und zum Ausgeben (102) eines Notsteuersignals (211) zum automatisierten Ansteuern des Fahrzeugsystems (3) in Abhängigkeit von der Reaktionsmaßnahme (220) ausgebildet ist.

11. Kontrollsystem (2) nach Anspruch 10,
**dadurch gekennzeichnet,**
**dass** die lokalen Kontrolleinheiten (10) und die Zentraleinheit (20) zum Ausführen eines Verfahrens (100) nach einem der Ansprüche 2 bis 8 ausgebildet sind.

## Claims

1. Method (100) for operating a control system (2) for automated control of a vehicle system (3) of a vehicle (1), the control system having multiple local control units (10) and a central unit (20) that communicates with the control units (10),
the method comprising the following method steps:
- recording (101) environmental data (200) of the vehicle (1) by means of the local control units (10), each of which comprises a local control element (11) and at least one sensor unit (12) that is connected to the relevant local control element (11),
- outputting (102) a normal control signal (210) for automated control of the vehicle system (3) on the basis of the environmental data (200) of the local control units (10) by means of the central unit (20),
**characterized in that**
the method comprises the following method steps:
- detecting (103) an emergency situation by means of a detecting control element (11.1) of the local control elements (11) of the local control units (10) on the basis of the environmental data (200),
- determining (104) a reaction measure (220) on the basis of the emergency situation by means of the detecting control element (11.1),
- outputting (102) an emergency control signal (211) for automated control of the vehicle system (3) on the basis of the reaction measure (220) by means of the detecting control element (11.1).

2. Method (100) according to claim 1,
**characterized in that**
each of the control units (10) is allocated a vehicle zone (201) of the vehicle (1), for which zone the relevant control unit (10) records the environmental data (200), the environmental data (200) of the control units (10) being combined to form a vehicle environment (1.1) for the purposes of outputting (102) the normal control signal (210) by means of the central unit (20).

3. Method (100) according to claim 1 or 2,
**characterized in that**
the normal control signal (210) is calculated, for the purposes of outputting (102) the normal control signal (210) by means of the central unit (20), using the environmental data (200) on the basis of comfort parameters (202) for driving comfort of the vehicle (1).

4. Method (100) according to any of the preceding claims,
**characterized in that**
the reaction measure (220) comprises an emergency trajectory (221) for carrying out a reaction maneuver of the vehicle (1) and/or for intervening, by means of the emergency trajectory (221), in a maneuver (221.1) of the vehicle (1) initiated by the central unit (20).

5. Method (100) according to any of the preceding claims,
**characterized in that**
each of the local control elements (11) is directly connected to the vehicle system (3) by at least one emergency communication link (13), the emergency control signal (211) being sent directly to the vehicle system (3) by the detecting control element (11.1) via the relevant emergency communication link (13).

6. Method (100) according to any of the preceding claims,
**characterized in that**
the emergency control signal (211) is sent by the detecting control element (11.1) to the central unit (20), the emergency control signal (211) comprising prioritization information by means of which the emergency control signal (211), for automated control of the vehicle system (3), is forwarded from the central control unit (20) to the vehicle system (3) and/or is prioritized over the normal control signal (210).

7. Method (100) according to any of the preceding claims,
**characterized in that**
the detecting control element (11.1) calculates the reaction measure (220) when determining (104) the reaction measure (220) and/or **in that** the detecting control element (11.1) receives multiple proposed measures (222) for the reaction measure (220) from the central unit (20) and determines the reaction measure (220) on the basis of the proposed measures (222).

8. Method (100) according to any of the preceding claims,
**characterized in that**
the method (100) comprises:
- sending (106) reaction data (223) regarding the reaction measure (220) and/or the emergency control signal (211) by means of the detecting control element (11.1) to the central unit (20) to allow the central unit (20) to control the vehicle system (3) on the basis of the reaction measure (220) after the reaction measure (220).

9. Computer program product comprising commands,
**characterized in that**
the commands, upon execution by a control system (2), cause the control system (2) to execute a method (100) according to any of the preceding claims.

10. Control system (2) for automated control of a vehicle system (3) of a vehicle (1), comprising
multiple local control units (10) for recording (101) environmental data (200) of the vehicle (1), each of which comprises a local control element (11) and at least one sensor unit (12) that is connected to the relevant local control element (11), and
a central unit (20) for automated control of the vehicle system (3) on the basis of the environmental data (200) of the local control units (10),
**characterized in that**
each of the local control elements (11) of the local control units (10) is designed to detect (103) an emergency situation on the basis of the environmental data (200), to determine (104) a reaction measure (220) on the basis of the emergency situation and to output (102) an emergency control signal (211) for automated control of the vehicle system (3) on the basis of the reaction measure (220).

11. Control system (2) according to claim 10,
**characterized in that**
the local control units (10) and the central unit (20) are designed to execute a method (100) according to any of claims 2 to 8.

## Revendications

1. Procédé (100) permettant de faire fonctionner un système de contrôle (2) pour la commande automatisée d'un système de véhicule (3) d'un véhicule (1) comportant plusieurs unités de contrôle (10) locales et une unité centrale (20) qui communique avec les unités de contrôle (10),
dans lequel
le procédé comprend les étapes de procédé suivantes
- acquisition (101) de données d'environnement (200) du véhicule (1) par les unités de contrôle (10) locales, qui présentent respectivement un élément de contrôle (11) local et au moins une unité de capteur (12), qui est reliée à l'élément de contrôle (11) local respectif,
- émission (102) d'un signal de commande normal (210) pour la commande automatisée du système de véhicule (3) en fonction des données d'environnement (200) des unités de contrôle (10) locales par l'unité centrale (20),
**caractérisé en ce**
**que** le procédé comprend les étapes de procédé suivantes :
- reconnaissance (103) d'une situation d'urgence par un élément de contrôle de reconnaissance (11.1) parmi les éléments de contrôle (11) locaux des unités de contrôle (10) locales, en fonction des données d'environnement (200),
- détermination (104) d'une mesure de réaction (220) en fonction de la situation d'urgence par l'élément de contrôle de reconnaissance (11.1),
- émission (102) d'un signal de commande d'urgence (211) pour la commande automatisée du système de véhicule (3) en fonction de la mesure de réaction (220) prise par l'élément de contrôle de reconnaissance (11.1).

2. Procédé (100) selon la revendication 1,
**caractérisé en ce**
**que** chacune des unités de contrôle (10) est associée à une zone de véhicule (201) du véhicule (1) pour laquelle l'unité de contrôle (10) respective acquiert les données d'environnement (200), dans lequel les données d'environnement (200) des unités de contrôle (10) sont regroupées par l'unité centrale (20) pour l'émission (102) du signal de commande normal (210) vers un environnement de véhicule (1.1).

3. Procédé (100) selon la revendication 1 ou 2,
**caractérisé en ce**
**que** le signal de commande normal (210) pour l'émission (102) du signal de commande normal (210) par l'unité centrale (20) est calculé à l'aide des données d'environnement (200) en fonction de paramètres de confort (202) pour un confort de conduite du véhicule (1).

4. Procédé (100) selon l'une des revendications précédentes,
**caractérisé en ce**
**que** la mesure de réaction (220) comprend une trajectoire d'urgence (221) pour l'exécution d'une manœuvre de réaction du véhicule (1) et/ou pour l'intervention, à l'aide de la trajectoire d'urgence (221), dans une manœuvre (221.1) du véhicule (1) lancée par l'unité centrale (20).

5. Procédé (100) selon l'une des revendications précédentes,
**caractérisé en ce**
**que** chacun des éléments de contrôle (11) locaux est directement relié au système de véhicule (3) par respectivement au moins une liaison de communication d'urgence (13), dans lequel le signal de commande d'urgence (211) est envoyé par l'élément de contrôle de reconnaissance (11.1) directement au système de véhicule (3) par l'intermédiaire de la liaison de communication d'urgence (13) respective.

6. Procédé (100) selon l'une des revendications précédentes,
**caractérisé en ce**
**que** le signal de commande d'urgence (211) est envoyé par l'élément de contrôle de reconnaissance (11.1) à l'unité centrale (20), dans lequel le signal de commande d'urgence (211) comprend une information d'attribution de priorité grâce à laquelle le signal de commande d'urgence (211) est transmis par l'unité de commande centrale (20) au système de véhicule (3) pour la commande automatisée du système de véhicule (3) et/ou se voit attribuer une priorité par rapport au signal de commande normal (210).

7. Procédé (100) selon l'une des revendications précédentes,
**caractérisé en ce**
**que** l'élément de contrôle de reconnaissance (11.1) calcule la mesure de réaction (220) lors de la détermination (104) de la mesure de réaction (220) et/ou **que** l'élément de contrôle de reconnaissance (11.1) reçoit de l'unité centrale (20) plusieurs propositions de mesures (222) pour la mesure de réaction (220) et détermine la mesure de réaction (220) à l'aide des propositions de mesures (222).

8. Procédé (100) selon l'une des revendications précédentes,
**caractérisé en ce**
**que** le procédé (100) comprend :
- envoi (106) de données de réaction (223) relatives à la mesure de réaction (220) et/ou au signal de commande d'urgence (211) par l'élément de contrôle de reconnaissance (11.1) à l'unité centrale (20), afin de permettre à l'unité centrale (20) de commander le système de véhicule (3) en fonction de la mesure de réaction (220) et conformément à la mesure de réaction (220).

9. Produit programme d'ordinateur comprenant des instructions,
**caractérisé en ce**
**que** les instructions, lorsqu'elles sont exécutées par un système de contrôle (2), amènent le système de contrôle (2) à exécuter un procédé (100) selon l'une des revendications précédentes.

10. Système de contrôle (2) pour la commande automatisée d'un système de véhicule (3) d'un véhicule (1), présentant
plusieurs unités de contrôle (10) locales pour l'acquisition (101) de données d'environnement (200) du véhicule (1), qui présentent respectivement un élément de contrôle (11) local et au moins une unité de capteur (12), qui est reliée à l'élément de contrôle (11) local respectif, et
une unité centrale (20) pour la commande automatisée du système de véhicule (3) en fonction des données d'environnement (200) des unités de contrôle (10) locales,
**caractérisé en ce**
**que** chacun des éléments de contrôle (11) locaux des unités de contrôle (10) locales est conçu pour la reconnaissance (103) d'une situation d'urgence en fonction des données d'environnement (200), la détermination (104) d'une mesure de réaction (220) en fonction de la situation d'urgence et l'émission (102) d'un signal de commande d'urgence (211) pour la commande automatisée du système de véhicule (3) en fonction de la mesure de réaction (220).

11. Système de contrôle (2) selon la revendication 10,
**caractérisé en ce**
**que** les unités de contrôle (10) locales et l'unité centrale (20) sont conçues pour l'exécution d'un procédé (100) selon l'une des revendications 2 à 8.
